# EUROPÄISCHE PATENTSCHRIFT

(11) **EP 1 045 131 B1**
(45) Veröffentlichungstag und Bekanntmachung des Hinweises auf die Patenterteilung: **19.01.2005**
(21) Anmeldenummer: 00104765.3
(22) Anmeldetag: 04.03.2000
(51) Int. Cl.: F02M 37/00, F02M 31/20

(54) **Einrichtung zur Versorgung einer Brennkraftmaschine eines Kraftfahrzeuges mit Kraftstoff**
Arrangement for supplying fuel to a vehicle engine
Arrangement pour alimenter un moteur de véhicule en carburant

(30) Priorität: 13.04.1999 DE 19916530
(43) Veröffentlichungstag der Anmeldung: 18.10.2000
(73) Patentinhaber: Siemens Aktiengesellschaft, 80333 München (DE)
(72) Erfinder: Distelhoff, Markus, Dr., 60594 Frankfurt (DE); Eck, Karl, 60318 Frankfurt (DE); Fröhlich, Winfried, 65520 Bad Camberg (DE); Keller, Dieter, 63743 Aschaffenburg (DE); Klöker, Justus, Dr., 61267 Neu-Anspach (DE); Meyer, Knut, Dr., 45239 Essen (DE); Mohr, Ingo, 56462 Höhn (DE); Rumpf, Bernd, 61130 Nidderau-Windecken (DE); Sinz, Wolfgang, Dr., 65843 Sulzbach (DE)

(56) Entgegenhaltungen:
- EP-A- 0 059 303
- EP-A- 0 292 983
- EP-A- 0 807 756
- WO-A-88/05127
- WO-A-98/51923
- WO-A-99/67590
- DE-A- 3 905 254
- DE-A- 19 702 440
- GB-A- 2 246 988
- US-A- 4 491 117
- US-A- 5 850 873
- PATENT ABSTRACTS OF JAPAN vol. 1996, no. 09, 30. September 1996 (1996-09-30) & JP 08 121269 A (HITACHI CONSTR MACH CO LTD), 14. Mai 1996 (1996-05-14)

## Beschreibung

Die Erfindung betrifft eine Einrichtung zur Versorgung einer Brennkraftmaschine eines Kraftfahrzeuges mit Kraftstoff mit einer von einem Kraftstoffbehälter zu der Brennkraftmaschine führenden Vorlaufleitung und mit einer Rücklaufleitung zur Rückführung des Kraftstoffs in den Kraftstoffbehälter und mit einer Kühleinrichtung zur Kühlung des in den Kraftstoffbehälter zurückgeführten Kraftstoffs.

Solche Einrichtungen werden in heutigen Kraftfahrzeugen mit Diesel-Brennkraftmaschinen häufig eingesetzt und sind aus der Praxis bekannt. Die Kühleinrichtung hat hierbei einen in der Rücklaufleitung montierten, dem Fahrtwind des Kraftfahrzeuges ausgesetzten Kühler. Die Kühlung des Kraftstoffs dient dazu, die Temperatur im Kraftstoffbehälter unter einem vorgesehenen Wert zu halten. Die maximale Temperatur, die im Kraftstoffbehälter nicht überschritten werden soll, ist im wesentlichen abhängig von dem Material des Kraftstoffbehälters und beträgt bei heutigen Kraftstoffbehältern aus Kunststoff ungefähr 70°C. Die Kühlung des Kraftstoffs in der Rücklaufleitung ist beispielsweise bei als Common-Rail bezeichneten Systemen von Brennkraftmaschinen erforderlich, da hierbei der über die Rücklaufleitung zurückgeführte Kraftstoff von der Brennkraftmaschine besonders stark erwärmt wird.

Nachteilig bei der bekannten Einrichtung ist, dass sie durch den im Fahrtwind zu befestigenden Kühler baulich sehr aufwendig gestaltet und kostenintensiv zu fertigen ist.

Mittel zur Führung von kühlender Luft entlang eines Teilstücks der Rücklaufleitung sind aus der EP 0 807 756 A2, WO 98/51923, EP 0 292 983 A1 und der DE 197 02 440 A1 bekannt.

Der Erfindung liegt das Problem zugrunde, eine Einrichtung der eingangs genannten Art so zu gestalten, dass sie konstruktiv möglichst einfach aufgebaut und kostengünstig herzustellen ist.

Dieses Problem wird erfindungsgemäß dadurch gelöst, dass die Rücklaufleitung aus einem Material mit einer hohen Wärmeleitfähigkeit gefertigt ist und dass die Kühleinrichtung Mittel zur Führung eines kühlenden Mediums entlang zumindest eines Teilstücks der Rücklaufleitung aufweist.

Durch diese Gestaltung kann der Kraftstoff Wärme über die Wandung der Rücklaufleitung abgeben. Hierdurch sind für die Kühlung des Kraftstoffs keine aufwendig in der Rücklaufleitung zu montierenden Bauteile erforderlich. Die erfindungsgemäße Einrichtung ist daher besonders einfach aufgebaut und lässt sich kostengünstig herstellen. Da der Kraftstoff innerhalb der Rücklaufleitung eine hohe Temperaturdifferenz gegenüber der Umgebung hat, genügt als kühlendes Medium in der Regel Umgebungsluft des Kraftfahrzeuges.

Das den Kraftstoff in der Rücklaufleitung kühlende Medium könnte beispielsweise wie bei der bekannten Einrichtung Fahrtwind des Kraftfahrzeuges sein. Hierbei ist jedoch insbesondere bei Bergfahrten des Kraftfahrzeuges oder im Verkehrs-Stau eine ausreichende Kühlung des Kraftstoffs nicht gewährleistet. Der Kraftstoff in der Rücklaufleitung läßt sich gemäß einer vorteilhaften Weiterbildung der Erfindung zuverlässig auf ein vorgesehenes Temperaturniveau kühlen, wenn die Kühleinrichtung ein die Luft entlang der Rücklaufleitung förderndes Gebläse oder eine Ansaugeinheit für Verbrennungsluft aufweist. Die Kühlung der Rücklaufleitung mit von der Brennkraftmaschine angesaugter Verbrennungsluft hat zudem den Vorteil, daß durch Undichtigkeiten oder durch Permeation aus der erfindungsgemäßen Einrichtung entweichender Kraftstoff der Brennkraftmaschine zugeführt wird.

Der in der Rücklaufleitung geführte Kraftstoff wird gemäß einer anderen vorteilhaften Weiterbildung der Erfindung besonders stark gekühlt, wenn die Kühleinrichtung einen Lüftungskanal zur Aufnahme der Rücklaufleitung und zur Führung der kühlenden Luft entlang der Rücklaufleitung aufweist.

Die Kühleinrichtung benötigt gemäß einer anderen vorteilhaften Weiterbildung der Erfindung kein zusätzlich zu montierendes Gebläse, wenn der Lüftungskanal bis zu einer Saugseite eines Kühlgebläses einer Flüssigkeitskühlung der Brennkraftmaschine geführt ist.

Die erfindungsgemäße Einrichtung läßt sich besonders einfach im Kraftfahrzeug montieren, wenn die Vorlaufleitung innerhalb des Lüftungskanals angeordnet ist. Hierdurch lassen sich die Vorlaufleitung und die Rücklaufleitung zunächst miteinander verbinden und anschließend gemeinsam in dem Lüftungskanal befestigen. Da der in der Vorlaufleitung geförderte Kraftstoff eine geringere Temperatur aufweist als der in der Rücklaufleitung vorhandene, kann diese Gestaltung nicht zu einer unnötigen Erwärmung des in den Kraftsoffbehälter zurückgeführten Kraftstoffs beitragen.

Der Kraftstoffbehälter läßt sich gemäß einer anderen vorteilhaften Weiterbildung der Erfindung einfach auf einem vorgesehenen Temperaturniveau halten, wenn der Lüftungskanal zumindest einen Teilbereich des Kraftstoffbehälters mit Abstand ummantelt. Hierbei genügt es, wenn der Bodenbereich des Kraftstoffbehälters ummantelt ist, da insbesondere bei nahezu leerem Kraftstoffbehälter der von der Rücklaufleitung zurückgeführte Kraftstoff einen großen Einfluß auf die Temperatur im Kraftstoffbehälter hat.

Die Rücklaufleitung hat gemäß einer anderen vorteilhaften Weiterbildung der Erfindung eine besonders große wärmeabgebende Fläche, wenn auf der Rücklaufleitung Kühlelemente angeordnet sind.

Zur weiteren Verbesserung der Übertragung der Wärme von der Rücklaufleitung auf das kühlende Medium trägt es gemäß einer anderen vorteilhaften Weiterbildung der Erfindung durch Leitelemente zur Führung kühlender Luft auf die Rücklaufleitung bei.

Die erfindungsgemäße Einrichtung gestaltet sich konstruktiv besonders einfach, wenn die Vorlaufleitung aus einem Material mit einer hohen Wärmeleitfähigkeit gefertigt ist und wenn die Rücklaufleitung und die Vorlaufleitung aneinander anliegen. Da der Kraftstoff in der Rücklaufleitung eine höhere Temperatur und einen kleineren Volumenstrom aufweist als in der Vorlaufleitung, wird er hierdurch besonders zuverlässig gekühlt. Diese Gestaltung kann alleine oder zusammen mit der an der Rücklaufleitung entlanggeführten kühlenden Luft die Temperatur im Kraftstoffbehälter gering halten. Ein weiterer Vorteil dieser Gestaltung besteht darin, daß die Brennkraftmaschine bei einem Kaltstart vorgewärmten Kraftstoff erhält.

Die Montage der Vorlaufleitung und der Rücklaufleitung im Kraftfahrzeug gestaltet sich gemäß einer anderen vorteilhaften Weiterbildung der Erfindung besonders einfach, wenn die Vorlaufleitung und die Rücklaufleitung ein Teilstück mit einer gemeinsamen Trennwand mit einer hohen Wärmeleitfähigkeit aufweisen.

Die erfindungsgemäße Einrichtung erfordert einen besonders geringen baulichen Aufwand, wenn die Rücklaufleitung und die Vorlaufleitung miteinander verdrillt sind.

Die Erfindung läßt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig.1: eine schematische Darstellung einer erfindungsgemäßen Einrichtung mit einem Lüftungskanal,
- Fig.2: schematisch eine weitere Ausführungsform der erfindungsgemäßen Einrichtung,
- Fig.3: eine weitere Ausführungsform der erfindungsgemäßen Einrichtung in schematischer Darstellung,
- Fig.4: eine Schnittdarstellung durch ein gemeinsames Teilstück von Vorlauf- und Rücklaufleitung der Figur 3 entlang der Linie IV- IV.

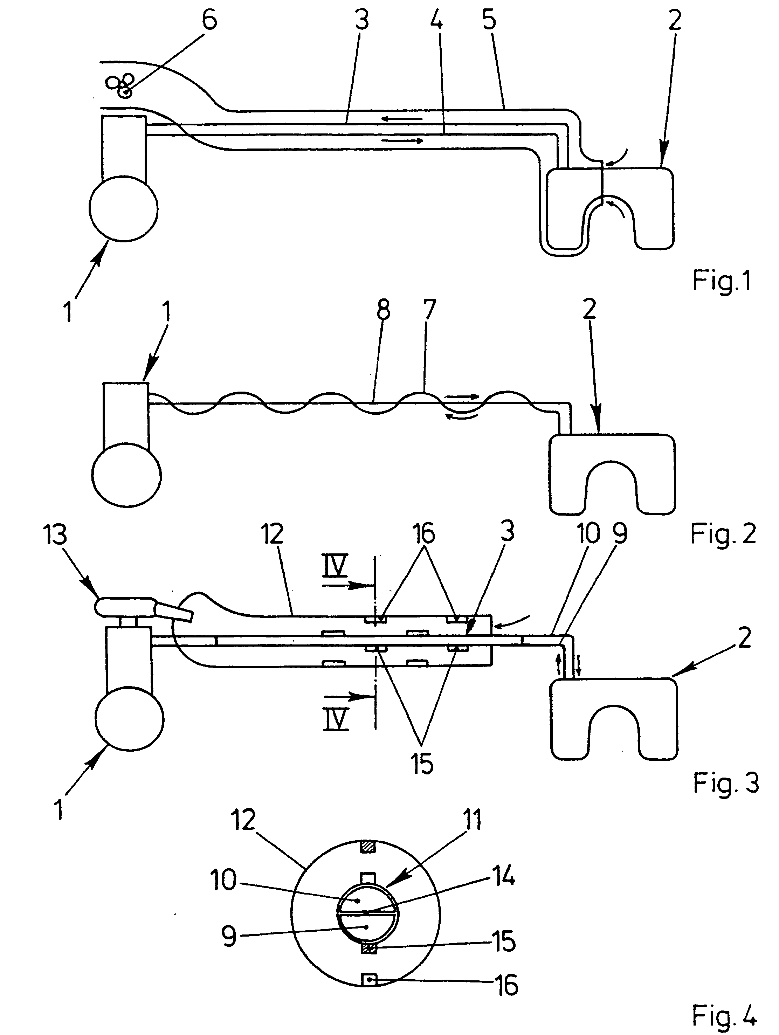

Die Figur 1 zeigt schematisch eine als Dieselmotor ausgebildete Brennkraftmaschine 1 eines Kraftfahrzeuges und einen als Satteltank gestalteten Kraftstoffbehälter 2. Die Brennkraftmaschine 1 wird über eine Vorlaufleitung 3 mit Kraftstoff aus dem Kraftstoffbehälter 2 versorgt. Überschüssiger, von der Brennkraftmaschine 1 sehr stark erwärmter Kraftstoff wird über eine Rücklaufleitung 4 in den Kraftstoffbehälter 2 zurückgeführt. Die Vorlaufleitung 3 und die Rücklaufleitung 4 sind in einem gemeinsamen, sich von der Brennkraftmaschine 1 bis zu dem Kraftstoffbehälter 2 erstreckenden Lüftungskanal 5 angeordnet. An dem an der Brennkraftmaschine 1 angeordneten Ende des Lüftungskanals 5 ist ein Gebläse 6 angeordnet. Das Gebläse 6 saugt Luft durch den Lüftungskanal 5 an. Zur Verdeutlichung sind in der Zeichnung Strömungsrichtungen von Luft und von Kraftstoff mit Pfeilen gekennzeichnet. Die Rücklaufleitung 4 ist aus einem Material mit einer guten Wärmeleitfähigkeit gefertigt. Der heiße, in der Rücklaufleitung 4 strömende Kraftstoff gibt einen Großteil seiner Wärme an die in dem Lüftungskanal 5 strömende Luft ab. Durch eine entsprechende Gestaltung der Rücklaufleitung 4, des Gebläses 6 und des Lüftungskanals 5 läßt sich die Temperatur des in den Kraftstoffbehälter 2 zurückgeführten Kraftstoffs zuverlässig unterhalb eines vorgesehenen Wertes von beispielsweise 70°C halten.

Bei dem Gebläse 6 kann es sich um ein separates Gebläse oder um ein Gebläse für eine nicht dargestellte Flüssigkeitskühlung der Brennkraftmaschine 1 handeln. Der Kraftstoffbehälter 2 ist nur mit demjenigen Bereich in dem Lüftungskanal 5 angeordnet, in den die Rücklaufleitung 4 mündet. Dieser Bereich wird durch den von der Brennkraftmaschine 1 zurückgeführten Kraftstoff besonders stark erwärmt. Durch die Förderung der Luft von dem Kraftstoffbehälter 2 zu der Brennkraftmaschine 1 und damit gegen die Strömungsrichtung des Kraftstoffs in der Rücklaufleitung 4 wird ein sehr hoher Wärmeübergang des in der Rücklaufleitung 4 fließenden Kraftstoffs auf die Luft sichergestellt. Selbstverständlich kann das Gebläse 6 auch Luft in den Lüftungskanal 5 hineinfördern. Hierdurch baut sich in dem Lüftungskanal 5 ein diesen stabilisierender Druck auf.

Figur 2 zeigt schematisch eine weitere Ausführungsform der erfindungsgemäßen Einrichtung, bei dem eine Vorlaufleitung 7 und eine Rücklaufleitung 8 miteinander verdrillt sind. Die Vorlaufleitung 7 und die Rücklaufleitung 8 sind aus einem Wärme gut leitenden Material gefertigt. Da in der Vorlaufleitung 7 ein im Vergleich zur Rücklaufleitung 8 größerer Volumenstrom bei einer niedrigeren Temperatur gefördert wird, kann Wärme von der Rücklaufleitung 8 einfach auf die Vorlaufleitung 7 überströmen. Vorlaufleitung 7 und Rücklaufleitung 8 bilden damit einen Gegenstromwärmetauscher.

Figur 3 zeigt schematisch eine weitere Ausführungsform der erfindungsgemäßen Einrichtung, bei dem eine Vorlaufleitung 9 und eine Rücklaufleitung 10 ein gemeinsames Teilstück 11 aufweisen. Weiterhin sind die Vorlaufleitung 9 und die Rücklaufleitung 10 in einem gemeinsamen Lüftungskanal 12 angeordnet. Der Lüftungskanal 12 ist mit einem Ende an eine Ansaugeinheit 13 der Brennkraftmaschine 1 angeschlossen. Auf dem gemeinsamen Teilstück 11 sind Kühlelemente 15 angeordnet. Der Lüftungskanal 12 trägt an seiner Innenseite Leitelemente 16 zur Lenkung der Luft.

Figur 4 zeigt stark vergrößert das in dem Lüftungskanal 12 angeordnete gemeinsame Teilstück 11 der Vorlaufleitung 9 und der Rücklaufleitung 10. Hierbei ist zu erkennen, daß zwischen der Vorlaufleitung 9 und der Rücklaufleitung 10 eine Trennwand 14 angeordnet ist. Die Trennwand 14 ist aus einem Material mit einer hohen Wärmeleitfähigkeit gefertigt, so daß Wärme von der Rücklaufleitung 10 auf die Vorlaufleitung 9 und auf die in dem Lüftungskanal 12 strömende Luft überströmen kann.

## Patentansprüche

1. Einrichtung zur Versorgung einer Brennkraftmaschine (1) eines Kraftfahrzeuges mit Kraftstoff mit einer von einem Kraftstoffbehälter (2) zu der Brennkraftmaschine (1) führenden Vorlaufleitung (7, 9) und mit einer Rücklaufleitung (4, 8, 10) zur Rückführung des Kraftstoffs in den Kraftstoffbehälter (2) und mit einer Kühleinrichtung zur Kühlung des in den Kraftstoffbehälter (2) zurückgeführten Kraftstoffs, wobei die Rücklaufleitung (4, 8, 10) aus einem Material mit einer hohen Wärmeleitfähigkeit gefertigt ist und die Kühleinrichtung Mittel zur Führung eines kühlenden Mediums entlang zumindest eines Teilstücks der Rücklaufleitung (4, 8, 10) aufweist, **dadurch gekennzeichnet, dass** die Kühleinrichtung einen Lüftungskanal (5, 12) zur Aufnahme der Rücklaufleitung (4, 10) und zur Führung der kühlenden Luft entlang der Rücklaufleitung (4, 10) hat und dass der Lüftungskanal (5, 12) bis zu einer Saugseite eines Kühlgebläses einer Flüssigkeitskühlung der Brennkraftmaschine (1) geführt ist.

2. Einrichtung nach Anspruch 1, **dadurch gekennzeichnet, dass** die Vorlaufleitung (3, 9) innerhalb des Lüftungskanals (5, 12) angeordnet ist.

3. Einrichtung nach zumindest einem der vorhergehenden Ansprüche, **dadurch gekennzeichnet, dass** der Lüftungskanal (3) zumindest einen Teilbereich des Kraftstoffbehälters (2) mit Abstand ummantelt.

4. Einrichtung nach zumindest einem der vorhergehenden Ansprüche, **dadurch gekennzeichnet, dass** auf der Rücklaufleitung (10) Kühlelemente (15) angeordnet sind.

5. Einrichtung nach zumindest einem der vorhergehenden Ansprüche, **gekennzeichnet durch** Leitelemente (16) zur Führung kühlender Luft auf die Rücklaufleitung (10).

6. Einrichtung nach zumindest einem der vorhergehenden Ansprüche, **dadurch gekennzeichnet, dass** die Vorlaufleitung (7, 9) aus einem Material mit einer hohen Wärmeleitfähigkeit gefertigt ist und dass die Rücklaufleitung (8, 10) und die Vorlaufleitung (7, 9) aneinander anliegen.

7. Einrichtung nach zumindest einem der vorhergehenden Ansprüche, **dadurch gekennzeichnet, dass** die Vorlaufleitung (9) und die Rücklaufleitung (10) ein Teilstück (11) mit einer gemeinsamen Trennwand (14) mit einer hohen Wärmeleitfähigkeit aufweisen.

8. Einrichtung nach zumindest einem der vorhergehenden Ansprüche, **dadurch gekennzeichnet, dass** die Rücklaufleitung (8) und die Vorlaufleitung (7) miteinander verdrillt sind.

## Claims

1. Device for supplying an internal combustion engine (1) of a motor vehicle with fuel having a feed line (7, 9) which leads from a fuel tank (2) to the internal combustion engine (1) and having a return line (4, 8, 10) for the purpose of returning the fuel to the fuel tank (2) and having a cooling device for cooling the fuel fed back into the fuel tank (2), the return line (4, 8, 10) being manufactured from a material of high thermal conductivity and the cooling device having means for guiding a cooling medium along at least a subsection of the return line (4, 8, 10), **characterized in that** the cooling device has a ventilation duct (5, 12) for accommodating the return line (4, 10) and for guiding the cooling air along the return line (4, 10) and **in that** the ventilation duct (5, 12) is continued as far as an intake side of a cooling fan of a liquid cooling system of the internal combustion engine (1).

2. Device according to Claim 1, **characterized in that** the feed line (3, 9) is arranged within the ventilation duct (5, 12).

3. Device according to at least one of the preceding claims, **characterized in that** the ventilation duct (3) encloses at least a partial region of the fuel tank (2) with a clearance.

4. Device according to at least one of the preceding claims, **characterized in that** cooling elements (15) are arranged on the return line (10).

5. Device according to at least one of the preceding claims, **characterized by** guide elements (16) for guiding cooling air onto the return line (10).

6. Device according to at least one of the preceding claims, **characterized in that** the feed line (7, 9) is manufactured from a material of high thermal conductivity, and **in that** the return line (8, 10) and the feed line (7, 9) rest against one another.

7. Device according to at least one of the preceding claims, **characterized in that** the feed line (9) and the return line (10) have a subsection (11) with a common partition wall (14) of high thermal conductivity.

8. Device according to at least one of the preceding claims, **characterized in that** the return line (8) and the feed line (7) are intertwined.

## Revendications

1. Dispositif destiné à alimenter en carburant un moteur à combustion interne (1) d'un véhicule automobile et comportant une conduite montante (7, 9) conduisant d'un réservoir à carburant (2) au moteur à combustion interne (1) et une conduite de retour (4, 8, 10) permettant de ramener le carburant dans le réservoir à carburant (2) et un système de refroidissement permettant de refroidir le carburant ramené dans le réservoir à carburant (2), la conduite de retour (4, 8, 10) étant fabriquée avec une matière ayant une conductibilité à la chaleur élevée et le système de refroidissement comportant des moyens permettant de guider un milieu refroidissant au moins le long d'une partie de la conduite de retour (4, 8, 10), **caractérisé par le fait que** le système de refroidissement a un canal de ventilation (5, 12) destiné à recevoir la conduite de retour (4, 10) et à guider l'air de refroidissement le long de la conduite de retour (4, 10) et que le canal de ventilation (5, 12) est amené jusqu'à un côté d'aspiration d'une soufflerie d'un système de refroidissement à liquide du moteur à combustion interne (1).

2. Dispositif selon la revendication 1 **caractérisé par le fait que** la conduite montante (3, 9) est montée à l'intérieur du canal de ventilation (5, 12).

3. Dispositif selon au moins l'une des revendications précédentes **caractérisé par le fait que** le canal de ventilation (3) enveloppe, avec un certain écart, au moins une partie du réservoir à carburant (2).

4. Dispositif selon au moins l'une des revendications précédentes **caractérisé par le fait que** des éléments radiateurs (15) sont montés sur la conduite de retour (10).

5. Dispositif selon au moins l'une des revendications précédentes **caractérisé par** des éléments de guidage (16) destinés à orienter l'air de refroidissement sur la conduite de retour (10).

6. Dispositif selon au moins l'une des revendications précédentes **caractérisé par le fait que** la conduite montante (7, 9) est fabriquée avec une matière ayant une conductibilité à la chaleur élevée et que la conduite de retour (8, 10) et la conduite montante (7, 9) sont appliquées l'une contre l'autre.

7. Dispositif selon au moins l'une des revendications précédentes **caractérisé par le fait que** la conduite montante (9) et la conduite de retour (10) comportent une partie (11) ayant une paroi commune (14) qui a une conductibilité à la chaleur élevée.

8. Dispositif selon au moins l'une des revendications précédentes **caractérisé par le fait que** la conduite de retour (8) et la conduite montante (7) sont torsadées l'une avec l'autre.
